# EUROPÄISCHE PATENTSCHRIFT

(11) **EP 2 227 412 B1**
(45) Veröffentlichungstag und Bekanntmachung des Hinweises auf die Patenterteilung: **22.05.2013**
(21) Anmeldenummer: 08801925.2
(22) Anmeldetag: 09.09.2008
(51) Int. Cl.: B62D 13/02, B62D 13/04

(54) **HYDRAULISCHES LENKSYSTEM FÜR FAHRZEUGANHÄNGER**
HYDRAULIC STEERING SYSTEM FOR VEHICLE TRAILERS
SYSTÈME DE DIRECTION HYDRAULIQUE POUR REMORQUE DE VÉHICULE

(30) Priorität: 22.11.2007 DE 102007056361
(43) Veröffentlichungstag der Anmeldung: 15.09.2010
(73) Patentinhaber: Hydac System GmbH, 66280 Sulzbach/Saar (DE)
(72) Erfinder: HONSBEIN, Rüdiger, 66822 Lebach-Dörsdorf (DE)
(74) Vertreter: Bartels, Martin Erich Arthur
(86) Internationale Anmeldenummer: PCT/EP2008/007351
(87) Internationale Veröffentlichungsnummer: WO 2009/065454

(56) Entgegenhaltungen:
- WO-A-2007/137970
- DE-A1- 2 732 081
- DE-A1- 10 222 309

## Beschreibung

Die Erfindung betrifft ein hydraulisches Lenksystem für Fahrzeuganhänger gemäß der Merkmalsausgestaltung des Oberbegriffes des Patentanspruches 1.

Bekannte Lenksysteme, wie sie auf dem Markt frei erhältlich sind, werden üblicherweise in Verbindung mit zwangsgelenkten Achsen benutzt, die bei Anhängern insbesondere als heckseitige Radgruppe vorgesehen sind. Als Ansteuerzylinder ist hierbei ein sogenannter Deichselzylinder vorgesehen, der an der Kupplungsverbindung mit dem Zugfahrzeug so angeordnet ist, dass Lenkmanöver der Zugmaschine zu einer mechanischen Verschiebung des Kolbens des als Gleichgangzylinder ausgebildeten Ansteuerzylinders führen. Der eine Druckraum des Ansteuerzylinders ist über eine erste Steuerleitung mit dem einen Druckraum des zumindest einen Betätigungszylinders verbunden, und der zweite Druckraum des Ansteuerzylinders ist über eine zweite Steuerleitung mit dem zweiten Druckraum des betreffenden Betätigungszylinders verbunden, wobei der zumindest eine Betätigungszylinder wiederum als Gleichgangzylinder ausgebildet ist und die Steuerdruckdifferenzen in erster und zweiter Steuerleitung in einen Lenkausschlag der betreffenden Anhänger-Radgruppe umsetzt.

Während diese bekannten Lenksysteme bei ungestörtem Normalbetrieb ein gutes Lenkverhalten von Anhängern ermöglichen, weisen derartige Systeme schwerwiegende Sicherheitsmängel auf, wenn im Fahrbetrieb ein Störfall auftritt. Wenn beispielsweise bei einem Bruch einer Steuerleitung oder einer Leckage an einer Anschlußverbindung einer Steuerleitung in dieser ein Druckverlust entsteht, der insbesondere von einem der Steuerleitung zugeordneten Hydrospeicher nicht ausgeglichen werden kann, dann führt ein derartiger unzulässiger Druckverlust zu einem ungewollten Lenkausschlag und zu einer entsprechend großen Betriebsgefahr. Ein anders gelagerter Störfall, bei dem ein zu lenkendes Rad an ein den Lenkausschlag blockierendes Hindernis an der Fahrbahn so anfährt, dass es gegen einen auszuführenden Lenkanschlag blockiert ist, führt wegen der dadurch bedingten Blockade der Kolbenbewegung des Betätigungszylinders zu einem entsprechenden Überdruck im System und damit zu einer Gefährdung der Systemkomponenten.

Durch die DE 31 36 657 A1 ist ein hydraulisches Lenksystem für Fahrzeuganhänger bekannt mit zumindest einem Betätigungszylinder zur Erzeugung von Lenkkräften für eine lenkbare Radgruppe des Anhängers und mit mindestens einem Ansteuerzylinder, der über Steuerleitungen mit dem Betätigungszylinder so verbunden ist, dass eine Wirkverbindung zur Lenkung der Radgruppe gebildet ist, und mit mindestens einem Hydrospeicher für das Aufrechterhalten eines Systemdruckes in den Steuerleitungen, wobei eine Sicherheitsventilanordnung vorgesehen ist, die bei durch einen Störfall bedingter Druckänderung anspricht. Ein vergleichbares hydraulisches Lenksystem ist auch durch die DE 27 32 081 C3 aufgezeigt.

Durch die nachveröffentlichte WO 2007/137970 A1 ist ein den nächsten Stand der Technik entsprechendes hydraulisches Lenksystem für Fahrzeuganhänger bekannt, mit zumindest einem Betätigungszylinder zur Erzeugung von Lenkkräften für eine lenkbare Radgruppe des Anhängers und mit mindestens einem Ansteuerzylinder, der über Steuerleitungen mit den Betätigungszylinder so verbunden ist, dass eine Wirkverbindung zur Lenkung der Radgruppe gebildet ist, und mit mindestens einem Hydrospeicher für das Aufrechterhalten eines Systemdrucks in den Steuerleitungen, wobei durch einen Störfall bedingter Druckänderung in der einen Steuerleitung eine Sicherheitsventilanordnung derart anspricht, dass in der anderen Steuerleitung eine entsprechende, kompensierende Druckänderung bewirkt wird. Die bei der bekannten Lösung eingesetzte Sicherheitsventilanordnung weist in der jeweils vorgesehenen Steuerleitung ein Druckventil auf, die jeweils von einer hydraulischen Längskolbenanordnung ansteuerbar sind, die wiederum als Steuereingangssignale den Lenk- und/oder Fahrzustand der Zugmaschine über eine entsprechende Messeinrichtung mitgeteilt bekommt. Die bekannte Lösung baut insoweit kompliziert auf und bereits aufgrund der damit einhergehenden Teilevielfalt sind Störungen im Betrieb nicht ausgeschlossen.

Im Hinblick auf diesen Stand der Technik liegt der Erfindung die Aufgabe zugrunde, ein hydraulisches Lenksystem für Fahrzeuganhänger zur Verfügung zu stellen, das gegen durch Störfälle verursachte Gefährdungen in hohem Maße gesichert ist.

Erfindungsgemäß ist diese Aufgabe durch ein Lenksystem gelöst, das die Merkmale des Patentanspruches 1 in seiner Gesamtheit aufweist.

Nach dem kennzeichnenden Teil des Anspruches 1 wird dies dadurch erreicht, dass die Sicherheitsventilanordnung ein 2/2-Wegeventil aufweist, das bei einem einen unzulässigen Druckverlust in einer Steuerleitung bewirkenden Störfall in den Schaltzustand steuerbar ist, in dem es die beiden Steuerleitungen miteinander verbindet. Dadurch wirken in einem solchen Störfall, beispielsweise einem Rohrbruch bei einer Steuerleitung, keine hydraulisch erzeugten Lenkkräfte auf die Radgruppe. Bei Anhängern, bei denen für die zu lenkenden Hinterränder eine äußere Kraft zur Zentrierung vorhanden ist, die zu lenkenden Hinterräder also in eine Neutral- oder Geradeausstellung leicht vorgespannt sind, stellen sich diese zu lenkenden Räder daher bei einem Rohrbruch einer betreffenden Steuerleitung in die Geradeaus-Position ein, so dass auch bei einem solchen Störfall eine Weiterfahrt, allerdings mit ungelenkter Radgruppe, möglich ist. Eine solche zentrierende Vorspannkraft kann durch Federn an der betreffenden Radgruppe oder durch die Achsgeometrie erzeugt werden. Störungen werden dadurch neutralisiert, so dass weder die Gefahr unkontrollierter Lenkausschläge (etwa bei Rohrbruch einer Steuerleitung) oder die Gefahr einer Systemüberlastung (bei Blockade der Lenkbewegung) besteht.

Bei vorteilhaften Ausführungsbeispielen kann die Sicherheitsventilanordnung ein Druckbegrenzungsventil enthalten, das bei einem einen unzulässigen Druckaufbau in einer Steuerleitung bewirkenden Störfall einen Fluidweg für einen Druckabbau freigibt. Bei derartigen Ausführungsbeispielen ist daher auch die Gefahr ausgeschlossen, dass bei einer mechanischen Blockade der Lenkbewegung eine Systemüberlastung oder -beschädigung eintritt.

Hinsichtlich des Hydrauliksystems kann die Anordnung vorzugsweise so getroffen sein, dass der Hydrospeicher über ein erstes und ein zweites durch den Speicherdruck öffenbares Rückschlagventil mit der einen bzw. der anderen Steuerleitung verbunden und als Nachfüll-Reservoir zum Ausgleich von Leckageverlusten der Steuerleitungen vorgesehen ist.

Bei einer besonders vorteilhaften Ausführungsform weist das System eine Art Brückenschaltung mit vier Rückschlagventilen auf, wobei ein Brückenzweig, mit dem der Hydrospeicher und das erste und das zweite Rückschlagventil verbunden sind, mit der einen bzw. der anderen Steuerleitung auch über ein drittes bzw. ein viertes Rückschlagventil verbindbar ist, die durch den Druck der jeweiligen Steuerleitung öffenbar sind.

Bei einer solchen Brückenschaltung kann das Druckbegrenzungsventil in den Brückenzweig so eingefügt sein, dass es im Öffnungszustand einen Druckabbau von der Verbindungsstelle zwischen drittem und viertem Rückschlagventil zur Verbindungsstelle zwischen dem ersten und dem zweiten Rückschlagventil hin ermöglicht. Da an der Verbindungsstelle zwischen dem ersten und dem zweiten Rückschlagventil auch der Hydrospeicher mit dem Brückenzweig in Verbindung ist, kann der Druckabbau von einer betreffenden, durch Überdruck belasteten Steuerleitung sowohl zum Hydrospeicher hin als auch, über das erste oder das zweite Rückschlagventil, zu der jeweils anderen Steuerleitung hin erfolgen.

Bei besonders vorteilhaften Ausführungsbeispielen ist das 2/2-Wegeventil über eine Schaltleitung fluidbetätigbar, die mit dem Brückenzweig an der Verbindungsstelle mit dem ersten und dem zweiten Rückschlagventil verbunden ist, also an einer Stelle, an der der Druckabfall in der einen oder der anderen Steuerleitung über das erste Rückschlagventil oder das zweite Rückschlagventil an die Schaltleitung des 2/2-Wegeventils signalisiert wird. Nachstehend ist die Erfindung anhand der Zeichnung im Einzelnen erläutert. Es zeigen:
- Fig. 1: eine stark schematisch vereinfachte, lediglich diagrammartig gezeichnete Darstellung der Radgruppen eines Fahrzeuganhängers, wobei die rückwärtige Radgruppe als sogenannte Lenkachse ausgebildet ist, versehen mit einem Lenksystem gemäß dem Stand der Technik;
- Fig. 2: eine Darstellung des Hydrosystems des dem Stand der Technik entsprechenden Lenksystems von Fig. 1 und
- Fig. 3: eine Darstellung des Systems eines Ausführungsbeispieles des erfindungsgemäßen Lenksystemes.

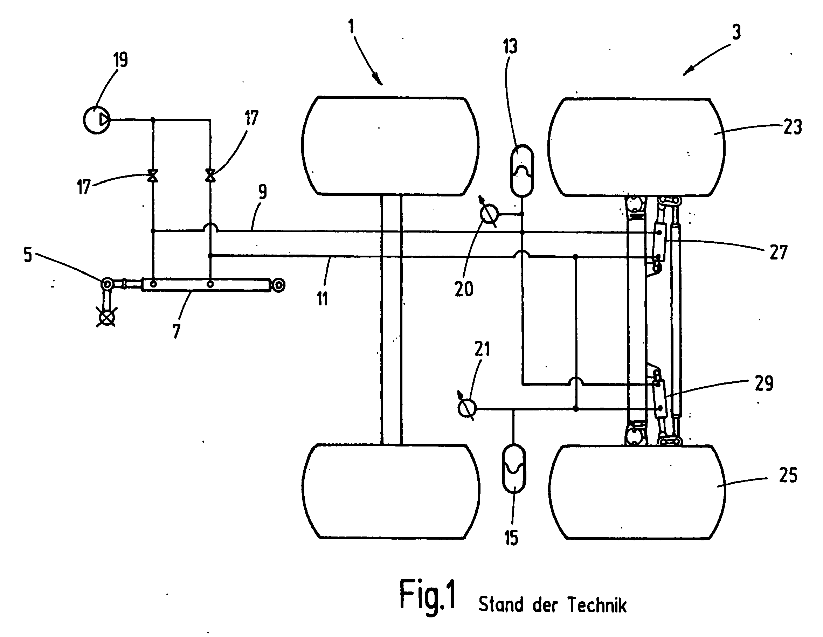

In Fig. 1 sind eine erste Radgruppe eines ansonsten nicht dargestellten Fahrzeuganhängers mit 1 und eine zweite, rückwärtige Radgruppe mit 3 bezeichnet, welch letztere als sogenannte Lenkachse ausgebildet ist. Eine lediglich schematisiert angedeutete Anhängerkupplung 5 für die Verbindung mit einem nicht dargestellten Zugwagen ist mit einem Ansteuerzylinder 7 mechanisch derart verbunden, dass dieser Gleichgangzylinder als sogenannter Deichselzylinder wirkt, dessen Kolben in Abhängigkeit von den Lenkbewegungen des Zugwagens in der einen oder anderen Richtung verschoben wird. Mit dem einen und dem anderen, an den Kolben angrenzenden Druckraum des Ansteuerzylinders 7 ist eine erste Steuerleitung 9 bzw. eine zweite Steuerleitung 11 verbunden. Jede Steuerleitung 9 und 11 ist mit einem Hydrospeicher 13 bzw. 15 sowie über Absperrorgane 17 mit einer Hydropumpe 19 verbunden, durch die die Steuerleitungen 9 und 11 und damit die Hydrospeicher 13 bzw. 15 mit einem Systemdruck versorgt sind. Manometer, die den Systemdruck in der Steuerleitung 9 und in der Steuerleitung 11 anzeigen, sind mit 19 bzw. 20 bezeichnet.

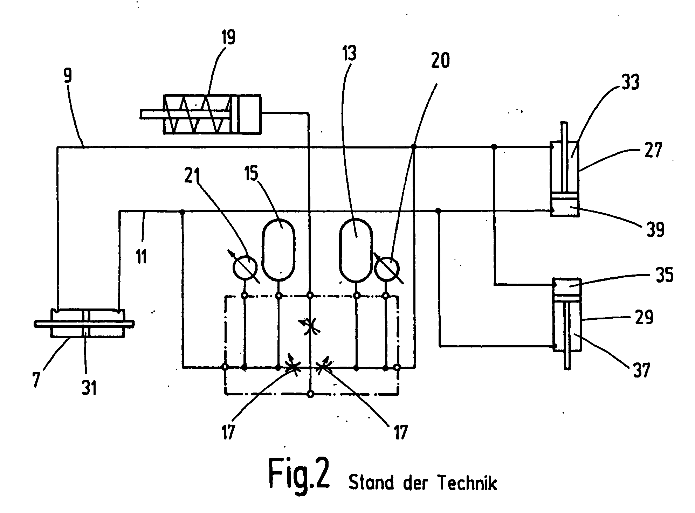

Die Räder 23 und 25 der Radgruppe 3 sind mit je einem Betätigungszylinder 27 bzw. 29 so verbunden, dass die Kolbenbewegungen dieser Gleichgangzylinder einen Lenkausschlag der Räder 23, 25 bewirken. Die Steuerleitungen 9 und 11 sind mit den Druckräumen der Betätigungszylinder 27 und 29 so verbunden, dass Druckdifferenzen der Steuerleitungen 9 und 11 Lenkausschläge der Räder 23 und 25 in jeweils gleichem Lenksinn bewirken. So führt eine durch Lenkbewegungen des Zugwagens über die Kupplung 5 übertragene Verschiebebewegung des Kolbens 31 des Ansteuerzylinders 7 in Fig. 2 nach links zu einer Druckzunahme in der Steuerleitung 9 und damit in den Druckräumen 33 und 35 der Betätigungszylinder 27 bzw. 29, mit einem entsprechenden Lenkausschlag beider damit verbundener Räder 23 und 25 in gleichem Lenksinn. Eine Bewegung des Kolbens 31 des Ansteuerzylinders 7 in Fig. 2 nach rechts führt zu einer Druckerhöhung in der zweiten Steuerleitung 11 und damit in den Druckräumen 37 und 39 der Betätigungszylinder 27 bzw. 29 und damit zu einem Lenkausschlag der Räder 23 und 25 im anderen Lenkungssinne.

Wenn es zu einem Rohrbruch oder anderweitigem Druckabfall in der ersten Steuerleitung 9 oder der zweiten Steuerleitung 11 kommt und wenn es sich dabei um einen solchen Störfall handelt, dass der Druckverlust nicht durch den einen Hydrospeicher 13 oder den anderen Hydrospeicher 15 ausgeglichen werden kann, kommt es zu einer ungewollten Verschiebung der Kolben beider Betätigungszylinder 27 und 29 und damit zu einem ungewollten, unkontrollierten Lenkausschlag der Räder 23 und 25.

Kommt es andererseits zu einem Störfall, bei dem das Rad 23 und/oder 25 gegen eine gewollte Lenkbewegung mechanisch blockiert ist, entsteht im einen oder anderen Druckraum der Betätigungszylinder 27 bzw. 29 ein Überdruck, der, wenn er durch die Kapazität eines der Hydrospeicher 13 und 15 nicht kompensierbar ist, zur Systemgefährdung führt.

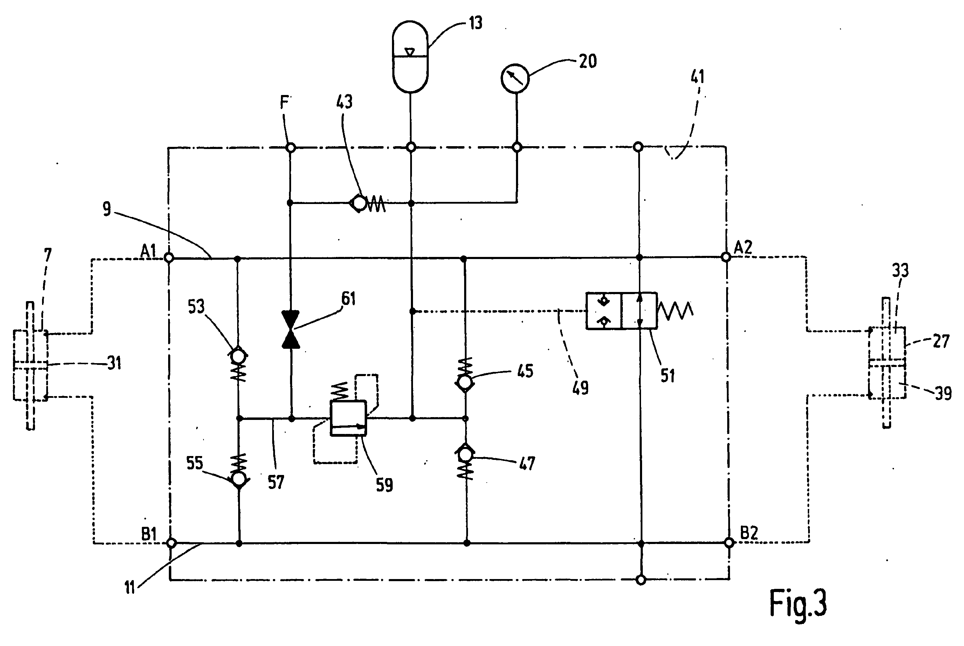

Bei dem in Fig. 3 dargestellten Ausführungsbeispiel der Erfindung weist das Lenksystem demgegenüber einen Sicherheitsblock 41 auf, durch den hindurch die erste Steuerleitung 9 von einem Anschluß A1 zu einem Anschluß A2 durchgehend hindurchgeführt und die zweite Steuerleitung 11 von einem Anschluß B1 her zu einem Anschluß B2 durchgehend hindurchgeführt sind. Beide Steuerleitungen 9 und 11 sind von den Anschlüssen A2 und B2 her mit den Druckräumen 33 bzw. 39 nur eines dargestellten Betätigungszylinders 27 verbunden. Bei Normalbetrieb, wenn kein Störfall gegeben ist, greift der Sicherheitsblock 41 nicht in die Funktion des Lenkkreises ein, d. h. die Bewegungen des Kolbens 31 des Ansteuerzylinders 7 erzeugen über die Anschlüsse A1 und B1 die entsprechenden Lenksignale an den Anschlüssen A2 und B2.

Von einem Füllanschluß F ist das System über ein Füllventil 43 mit einem Systemdruck von beispielsweise 100 bar befüllbar, wobei auch der zuvor mit beispielsweise 30 bar vorgespannte Hydrospeicher 13 geladen wird, der mit der Verbindungsstelle zwischen einem ersten Rückschlagventil 45 und einem zweiten Rückschlagventil 47 verbunden ist, die beide auf einen geringen Öffnungsdruck (beispielsweise 0,5 bar) eingestellt und durch den Druck des Hydrospeichers 13 öffenbar sind, so dass sich in den Steuerleitungen 9 und 11 der Systemdruck (Druck des Speichers 13) einstellt und der Hydrospeicher 13 auch als Nachfüll-Reservoir zum Ausgleich von Leckageverlusten der Steuerleitungen 9 und 11 wirksam ist. Mit der Verbindungsstelle zwischen erstem Rückschlagventil 45 und zweitem Rückschlagventil 47 ist auch die Schaltleitung 49 eines druckbetätigbaren 2/2-Wegeventils 51 in Verbindung. Dieses dient als Sicherheitsventil, über das erste Steuerleitung 9 und zweite Steuerleitung 11 unmittelbar miteinander verbindbar sind, wenn der Druck in der Schaltleitung 49 auf einen niedrigen Wert abfällt, beispielsweise auf einen Wert von 15 bar. Dies signalisiert den Störfall eines Rohrbruches oder einer anderen starken Leckage, die nicht durch den Hydrospeicher 13 ausgeglichen werden kann, wobei der Speicher 13 über das eine oder andere Rückschlagventil 45 oder 47 zur jeweils leckgeschlagenen Steuerleitung 9 oder 11 hin entladen wird. Durch die über das 2/2-Wegeventil 51 freigegebene Verbindung zwischen beiden Steuerleitungen 9 und 11 führt dieser Störfall nicht zu einem ungewollten Lenkausschlag der gelenkten Radgruppe 3.

Bei einem andersartigen Störfall, d.h. der erwähnten mechanischen Blockade am Betätigungszylinder 27, wirkt die erfindungsgemäße Sicherheitsventilanordnung einem sich aufbauenden Überdruck in einer betreffenden Steuerleitung 9 oder 11 entgegen. Zu diesem Zweck sind ein drittes Rückschlagventil 53 und ein viertes Rückschlagventil 55 vorgesehen, wobei das Rückschlagventil 53 mit der ersten Steuerleitung 9 und das vierte Rückschlagventil 55 mit der zweiten Steuerleitung 11 sowie beide miteinander so verbunden und geschaltet sind, dass sie jeweils durch den Druck der Steuerleitungen 9, 11 öffenbar sind. Diese Rückschlagventile 45, 47, 53 und 55 bilden eine Art Brückenschaltung in der Weise, dass ihre jeweiligen Verbindungsstellen über einen Brückenzweig 57 miteinander verbunden sind, in den ein Druckbegrenzungsventil 59 eingefügt ist.

Für den Störfall des Überdruckes in einer der Steuerleitungen 9 oder 11 ergibt sich dadurch folgende Funktionsweise: Wenn der Überdruck von einer der Steuerleitungen 9, 11 über das öffnende Rückschlagventil 53 oder 55 zum Brückenzweig 57 gelangt und der Überdruck den Ansteuerdruck (z. B. 150 bar) des Druckbegrenzungsventils 59 übersteigt, erfolgt der Druckabbau über den Brückenzweig 57 zur Verbindungsstelle zwischen erstem Rückschlagventil 45 und zweitem Rückschlagventil 47 und gleichzeitig zum Hydrospeicher 13. Dadurch kommt es zum Druckangleich in den Steuerleitungen 9 und 11, abgefedert durch den am Brückenzweig 57 ebenfalls angeschlossenen Hydrospeicher 13.

In Fig. 3 ist ein Absperrorgan mit 61 bezeichnet, über das das System bei Bedarf über den Füllanschluß F drucklos gemacht und entleert werden kann, beispielsweise für Wartungs- oder Kalibrierungsmaßnahmen.

## Patentansprüche

1. Hydraulisches Lenksystem für Fahrzeuganhänger, mit zumindest einem Betätigungszylinder (27, 29) zur Erzeugung von Lenkkräften für eine lenkbare Radgruppe (3) des Anhängers und mit mindestens einem Ansteuerzylinder (7), der über Steuerleitungen (9, 11) mit dem Betätigungszylinder (27, 29) so verbunden ist, dass eine Wirkverbindung zur Lenkung der Radgruppe (3) gebildet ist, und mit mindestens einem Hydrospeicher (13) für das Aufrechterhalten eines Systemdruckes in den Steuerleitungen (9, 11), wozu bei durch einen Störfall bedingter Druckänderung in der einen Steuerleitung (9, 11) eine Sicherheitsventilanordnung (41) derart anspricht, dass in der anderen Steuerleitung (11, 9) eine entsprechende, kompensierende Druckänderung bewirkt wird, wobei die Sicherheitsventilanordnung (41) ein 2/2-Wegeventil (51) aufweist, das bei einem einen unzulässigen Druckverlust in einer Steuerleitung (9, 11) bewirkenden Störfall in den Schaltzustand steuerbar ist, in dem es die beiden Steuerleitungen (9, 11) miteinander verbindet.

2. Lenksystem nach Anspruch 1, **dadurch gekennzeichnet, dass** die Sicherheitsventilanordnung (41) mindestens ein Druckbegrenzungsventil (59) enthält, das bei einem einen unzulässigen Druckaufbau in einer Steuerleitung (9, 11) bewirkenden Störfall einen Fluidweg für einen Druckabbau frei gibt.

3. Lenksystem nach Anspruch 1 oder 2, **dadurch gekennzeichnet, dass** der Hydrospeicher (13) über ein erstes (45) und ein zweites (47) durch den Speicherdruck öffenbares Rückschlagventil (45, 47) mit der einen bzw. der anderen Steuerleitung (9, 11) verbunden und als Nachfüll-Reservoir zum Ausgleich von Leckageverlusten der Steuerleitungen (9, 11) vorgesehen ist.

4. Lenksystem nach Anspruch 3, **dadurch gekennzeichnet, dass** in der Art einer Brückenschaltung ein Brückenzweig (57), mit dem der Hydrospeicher (13) und das erste (45) und das zweite Rückschlagventil(47) verbunden sind, mit der einen (9) bzw. der anderen Steuerleitung (11) auch über ein drittes (53) bzw. ein viertes Rückschlagventil (55) verbindbar ist, die durch den Druck der jeweiligen Steuerleitung (9, 11) öffenbar sind.

5. Lenksystem nach Anspruch 4, **dadurch gekennzeichnet, dass** das Druckbegrenzungsventil (59) in den Brückenzweig (57) so eingefügt ist, dass es im Öffnungszustand einen Druckabbau von der Verbindungsstelle zwischen drittem (53) und viertem Rückschlagventil (55) zur Verbindungsstelle zwischen dem ersten (45) und dem zweiten Rückschlagventil (47) hin ermöglicht.

6. Lenksystem nach Anspruch 5, **dadurch gekennzeichnet, dass** das 2/2-Wegeventil (51) über eine Schaltleitung (49) fluidbetätigbar ist, die mit dem Brückenzweig (57) an der Verbindungsstelle mit dem ersten (45) und dem zweiten Rückschlagventil (47) verbunden ist.

## Claims

1. A hydraulic steering system for vehicle trailers having at least one activation cylinder (27, 29) for generating steering forces for a steerable wheel group (3) of the trailer and having at least one control cylinder (7) connected to the activation cylinder (27, 29) via control lines (9, 11) such that an operative connection is formed for steering the wheel group (3) and having at least one hydraulic accumulator (13) for maintaining a system pressure in the control lines (9, 11), a safety valve arrangement (41) responding if the pressure changes in the control line (9, 11) due to a malfunction such that in the other control line (11, 9) a corresponding compensatory pressure change is brought about, the safety valve arrangement (41) having a 2/2-way valve (51) that can be actuated into the switching state if there is a malfunction bringing about an inadmissible loss of pressure in a control line (9, 11) by connecting the two control lines (9, 11) to one another.

2. The steering system according to Claim 1, **characterised in that** the safety valve arrangement (41) includes at least one pressure limitation valve (59) that clears a fluid path in order to decrease pressure if there is a malfunction that causes an inadmissible build-up of pressure in a control line (9, 11).

3. The steering system according to Claim 1 or 2, **characterised in that** the hydraulic accumulator (13) is connected to one or the other control line (9, 11) via a first (45) and a second (47) check valve (45, 47) that can be opened by the accumulator pressure and is provided as a re-fill reservoir for compensating for leakage losses of the control lines (9, 11).

4. The steering system according to Claim 3, **characterised in that** in the manner of a bridge connection a bridge section (57), by means of which the hydraulic accumulator (13) and the first (45) and the second check valve (47) are connected, can be connected to one (9) or the other control line (11), also by means of a third (53) or a fourth check valve (55) which can be opened by the pressure of the respective control line (9, 11).

5. The steering system according to Claim 4, **characterised in that** the pressure limitation valve (59) is fitted to the bridge section (57) such that in the open state it enables a decrease in pressure from the connection point between the third (53) and the fourth check valve (55) to the connection point between the first (45) and the second check valve (47).

6. The steering system according to Claim 5, **characterised in that** the 2/2-way valve (51) can be fluid-activated by a switching line (49) which is connected by the bridge section (57) at the connection point to the first (45) and the second check valve (47).

## Revendications

1. Système de direction hydraulique pour des remorques de véhicule, comprenant au moins un cylindre (27,29) d'actionnement pour la production de forces d'actionnement pour un groupe (3) de roues de la remorque, qui peut être dirigée, et comprenant au moins un cylindre (7) de commande, qui communique avec le cylindre (27, 29) d'actionnement par des conduits (9, 11) de commande, de manière à former une liaison d'action pour la direction du groupe (3) de roues, et comprenant au moins un accumulateur (13) hydraulique pour le maintien d'une pression de système dans les conduits (9, 11) de commande, pour lequel, lors d'une variation de la pression provoquée par un incident dans l'un des conduits (9, 11) de commande, un agencement (41) de vanne de sécurité réagit, de manière à provoquer une variation de pression de compensation correspondante dans l'autre conduit (11, 9) de commande, l'agencement (41) de vanne de sécurité ayant une vanne (51) à 2/2 voies qui, dans le cas d'un incident provoquant une perte de pression inadmissible dans un conduit (9, 11) de commande, peut être commandée pour passer dans l'état de commutation, dans lequel il met les deux conduits (9, 11) de commande en communication l'un avec l'autre.

2. Système de direction suivant la revendication 1, **caractérisé en ce que** l'agencement (41) de vanne de sécurité comporte au moins une vanne (59) de limitation de la pression qui, dans le cas d'un incident provoquant une accumulation de pression inadmissible dans un conduit (9, 11) de commande, libère un trajet pour du fluide pour une suppression de pression.

3. Système de direction suivant la revendication 1 ou 2, **caractérisé en ce qu'**un accumulateur (13) hydraulique communique avec l'un ou avec l'autre conduit (9, 11) de commande par un premier (45) et par un deuxième (47) clapets antiretour pouvant être ouverts par la pression de l'accumulateur et est prévu comme réservoir de remplissage à nouveau pour la compensation de pertes par des fuites dans les conduits (9, 11) de commande.

4. Système de direction suivant la revendication 3, **caractérisé en ce que**, à la façon d'un circuit en pont, une branche (57) de pont, par laquelle l'accumulateur (13) hydraulique et le premier (45) et le deuxième clapets (47) antiretour communiquent, peut communiquer avec l'un (9) ou avec l'autre conduit (11) de commande également par un troisième (53) ou par un quatrième clapet (55) antiretour qui peuvent être ouverts par la pression du conduit (9, 11) de commande respective.

5. système de direction suivant la revendication 4, **caractérisé en ce que** la vanne (59) de limitation de la pression est insérée dans la branche (7) du pont, de manière à permettre dans l'état ouvert une suppression de la pression du point de liaison entre le troisième (53) et le quatrième clapets (55) antiretour au point de liaison entre le premier (45) et le deuxième clapets (47) antiretour.

6. Système de direction suivant la revendication 5, **caractérisé en ce que** la vanne (51) à 2/2 voies peut être actionnée par un fluide par un conduit (49) de commutation, qui communique avec la branche (57) du pont au point de liaison entre le premier (45) et le deuxième clapets (47) antiretour.
